# EUROPÄISCHE PATENTANMELDUNG

(11) **EP 4 725 897 A1**
(43) Veröffentlichungstag der Anmeldung: **15.04.2026**
(21) Anmeldenummer: 24020310.9
(22) Anmeldetag: 10.10.2024
(51) Int. Cl.: C01B 3/38

(54) **VERFAHREN UND ANLAGE ZUR DAMPFREFORMIERUNG UND VERFAHREN ZUR UMRÜSTUNG EINER ANLAGE ZUR DAMPFREFORMIERUNG**

(71) Anmelder: Linde GmbH, 82049 Pullach (DE)
(72) Erfinder: Behrens, Axel, 82049 Pullach (DE); Bohn, Jan-Peter, 82049 Pullach (DE); Müller-Thorwart, Ole, 82049 Pullach (DE); Neuendorf, Stephanie, 82049 Pullach (DE)
(74) Vertreter: Fischer, Werner

(57) **Zusammenfassung**

Ein Verfahren zur Dampfreformierung wird vorgeschlagen, das ein Bereitstellen eines Vorreformierungseinsatzes (1), der Kohlenwasserstoffe mit einem, zwei und mehr Kohlenstoffatomen sowie Dampf aufweist, ein Vorreformieren des Vorreformierungseinsatzes (1) unter Erhalt eines Dampfreformierungseinsatzes (2) und ein Dampfreformieren des Dampfreformierungseinsatzes (2) oder eines Teils hiervon unter Erhalt eines Syntheserohgases (103) umfasst. Das Vorreformieren wird unter Verwendung einer mit elektrischem Strom beheizten Vorreformiereinheit (30) durchgeführt. Eine entsprechende Anlage zur Dampfreformierung und ein Verfahren zur Umrüstung einer Anlage zur Dampfreformierung werden ebenfalls vorgeschlagen.

## Beschreibung

### Gebiet

Die vorliegende Offenbarung betrifft ein Verfahren und eine Anlage zur Dampfreformierung sowie ein Verfahren zur Umrüstung einer Anlage zur Dampfreformierung.

### Hintergrund

Zur Herstellung von Synthesegas kann die Dampfreformierung verwendet werden, wie sie beispielsweise bei H.-W. Häring (Hrsg.), "Industrial Gases Processing", Wiley-VCH, 2006, insbesondere Abschnitt 5.2.2.1 , "Generation of Synthesis Gas by Steam Reforming", und Abschnitt 5.2.4, "Processes for the Production of Synthesis Gas from Hydrocarbons", beschrieben ist.

Die Dampfreformierung kann mit methanreichen Einsatzstoffen wie Erdgas betrieben werden. Ausgestaltungen eignen sich auch für die Verarbeitung von schwereren Kohlenwasserstoffen wie Naphtha oder Flüssiggas. Für die Dampfreformierung derartiger Einsatzstoffe kann in den Katalysatorrohren ein spezieller Katalysator mit alkalischen Komponenten, meist Pottasche, eingesetzt werden, um eine Rußbildung am Katalysator zu vermeiden. Eine Alternative besteht in der Verwendung einer Vorreformiereinheit (engl. Pre-Reformer), klassischerweise einem adiabatischen Festbettreaktor, der ein vorreformiertes Gemisch umfassend Methan, Kohlenmonoxid und Wasserstoff bei Temperaturen um 450 bis 550°C erzeugt. Da der Methangehalt bei den genannten Temperaturen noch ausgesprochen hoch ist, wird das erhaltene Gasgemisch anschließend der eigentlichen Dampfreformierung unterworfen.

Es besteht Entwicklungsbedarf beim Design und beim Betrieb von Anlagen zur Dampfreformierung, insbesondere im Zusammenhang mit der Umrüstung zur Verarbeitung schwererer Kohlenwasserstoffe als Methan.

### Übersicht

Vor diesem Hintergrund werden ein Verfahren und eine Anlage zur Dampfreformierung sowie ein Verfahren zur Umrüstung einer Anlage zur Dampfreformierung mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren zur Dampfreformierung umfasst das Bereitstellen eines Vorreformierungseinsatzes, der Kohlenwasserstoffe mit ein, zwei und mehr Kohlenstoffatomen sowie Dampf aufweist, ein Vorreformieren des Vorreformierungseinsatzes unter Erhalt eines Dampfreformierungseinsatzes, und ein Dampfreformieren des Dampfreformierungseinsatzes oder eines Teils hiervon unter Erhalt eines Syntheserohgases. Das Vorreformieren wird unter Verwendung einer mit elektrischem Strom beheizten Vorreformiereinheit durchgeführt.

Ausgestaltungen des vorgeschlagenen Verfahrens können eine beliebige Weiterbearbeitung des Synthesegases, beispielsweise eine Verdichtung, Abkühlung, Auftrennung, Aufreinigung, Wassergaskonversion und dergleichen umfassen. Zielprodukte können ein Synthesegas, Kohlenmonoxid und/oder Wasserstoff sein.

Kern der hier vorgeschlagenen Ausgestaltungen ist also der Einsatz einer elektrisch beheizten Vorreformiereinheit stomauf der eigentlichen Dampfreformierung. Vorteile ergeben sich insbesondere aus der ausgesprochen kompakten Bauweise einer elektrisch beheizten Vorreformiereinheit, weshalb eine Integration in eine bestehende Anlage hinsichtlich des Platzbedarfs besonders einfach ist.

Eine elektrisch beheizte Vorreformiereinheit erfordert nicht notwendig eine Einbindung in die Abwärmestrecke der Dampfreformierung, wenngleich dies zur Vorwärmung und beispielsweise im Sinne einer Anpassung an einen Zustand vor einer Umrüstung oder die abweichenden Wärmebedarfe des veränderten Einsatzes vorteilhaft und in hier vorgeschlagenen Ausgestaltungen, wie unten erläutert, vorgesehen sein kann.

Durch eine elektrisch beheizte Vorreformiereinheit werden keine zusätzlichen direkten Emissionen erzeugt, was insbesondere beim Einsatz von regenerativ erzeugten Strom einen reduzierten Kohlendioxidfußabdruck ergibt. Schwerere Einsatzstoffe als Methan, die bisher nur thermisch genutzt wurden, können in den Prozess integriert werden. Hierdurch ergibt sich eine Erhöhung der Ausbeute an Synthesegas. Eine elektrisch beheizte Vorreformiereinheit kann zusätzlich die Belastung der Dampfreformierung in gewissem Umfang reduzieren, wodurch eine Kapazitätserhöhung möglich ist.

Eine Integration von erneuerbarem Strom in die Dampfreformierung ist durch den Einsatz der elektrisch betriebenen Vorreformiereinheit möglich. Insbesondere bei flexibler Last und/oder flexiblem Einsatz kann die elektrisch beheizte Vorreformiereinheit das erforderliche Temperaturniveau einfach und schnell anpassen, da bei elektrischer Beheizung insbesondere schnelle Lastwechsel möglich sind.

In bestimmten Ausgestaltungen des vorgeschlagenen Verfahrens ist vorgesehen, dass der Vorreformierungseinsatz vor dem Vorreformieren einer Vorwärmung unterworfen wird und/oder der Dampfreformierungseinsatz vor dem Dampfreformieren einer Vorwärmung unterworfen wird. Auf diese Weise lässt sich auch bei Einsatz der vorgeschlagenen Maßnahmen die unter Verwendung eines Brennstoffs bereitgestellte Abwärme aus der Dampfreformierung nutzen.

In bestimmten Ausgestaltungen des vorgeschlagenen Verfahrens ist vorgesehen, dass für das Dampfreformieren eine brennerbefeuerte Dampfreformiereinheit mit einer Strahlungszone und einer Konvektionszone verwendet wird und dass die Vorwärmung des Vorreformierungseinsatzes vor dem Vorreformieren und/oder die Vorwärmung des Dampfreformierungseinsatzes vor dem Dampfreformieren in der Konvektionszone durchgeführt wird. Dies ermöglicht die Weiternutzung konventioneller Anlagen bzw. Anlagenteile für die im Zusammenhang mit den hier vorgeschlagenen Ausgestaltungen vorgesehene Vorwärmung.

In bestimmten Ausgestaltungen des vorgeschlagenen Verfahrens ist vorgesehen, dass die Vorwärmung des Vorreformierungseinsatzes vor dem Vorreformieren und die Vorwärmung des Dampfreformierungseinsatzes vor dem Dampfreformieren über zwei, in der Konvektionszone angeordnete Wärmetauscherbümdel durchgeführt wird. Hierdurch lässt sich eine besonders große Wärmemenge effektiv übertragen und eine Wärmeentnahme erreiche, die vergleichbar mit der in herkömmlichen Anlagen ist.

In bestimmten Ausgestaltungen des vorgeschlagenen Verfahrens ist vorgesehen, dass das für die Vorwärmung des Vorreformierungseinsatzes vor dem Vorreformieren verwendete Wärmetauscherbündel stromauf des für die Vorwärmung des Dampfreformierungseinsatzes vor dem Dampfreformieren verwendeten Wärmetauscherbündels in der Konvektionszone angeordnet ist.

In bestimmten Ausgestaltungen des vorgeschlagenen Verfahrens ist vorgesehen, dass die Kohlenwasserstoffe mit zwei und mehr Kohlenstoffatomen zu mehr als 2 Molprozent, insbesondere mehr als 8 Molprozent, in dem Vorreformierungseinsatz enthalten sind. Ist im Rahmen der vorliegenden Offenbarung von "schweren" oder "schwereren" Kohlenwasserstoffen die Rede, sind damit insbesondere derartige Kohlenwasserstoffe gemeint. Die Kohlenwasserstoffe mit zwei und mehr Kohlenstoffatomen können dabei auch Kohlenwasserstoffe mit bis zu 6 Kohlenstoffatomen umfassen. Wie erwähnt, ist durch den Einsatz des vorgeschlagenen Verfahrens eine stoffliche Nutzung auch solcher Kohlenwasserstoffe und entsprechender Gemische möglich.

In bestimmten Ausgestaltungen des vorgeschlagenen Verfahrens ist vorgesehen, dass die Vorreformiereinheit in einem Temperaturbereich von 350 bis 550 °C betrieben wird. Der Temperaturbereich kann in besonders vorteilhafter Weise an die Last und die jeweils verwendeten Einsatzstoffe angepasst werden.

Die vorgeschlagene Anlage zur Dampfreformierung weist eine Dampfreformiereinheit auf und ist zum Bereitstellen eines Vorreformierungseinsatzes, der Kohlenwasserstoffe mit einem, zwei und mehr Kohlenstoffatomen sowie Dampf umfasst, zum Vorreformieren des Vorreformierungseinsatzes unter Erhalt eines Dampfreformierungseinsatzes, und zum Dampfreformieren des Dampfreformierungseinsatzes oder eines Teils hiervon unter Erhalt eines Syntheserohgases eingerichtet. Für das Vorreformieren ist eine mit elektrischem Strom beheizbare Vorreformiereinheit bereitgestellt.

Vorteile und Merkmale, die bezüglich des vorgeschlagenen Verfahrens und seinen Ausgestaltungen beschrieben wurden, gelten auch für die vorgeschlagene Anlage und umgekehrt. Diese werden entsprechend nur einmalig beschrieben, und auf die jeweiligen Erläuterungen kann verwiesen werden.

Entsprechendes gilt auch für eine Anlage, die dazu eingerichtet sein kann, ein Verfahren gemäß einer beliebigen Ausgestaltung durchzuführen, sowie das vorgeschlagene Verfahren zum Umrüsten einer Anlage zur Dampfreformierung, die ohne eine Vorreformiereinheit ausgebildet ist, wobei das Umrüsten das Bereitstellen einer mit elektrischem Strom beheizbaren Vorreformiereinheit umfasst.

### Zeichnungen

Im Rahmen der vorliegenden Offenbarung vorgeschlagene Aspekte werden anhand der in den Figuren 1 bis 2C schematisch dargestellten Ausführungsbeispiele näher erläutert. Dabei zeigen die
Figur 1 eine nicht erfindungsgemäße Anlage zur Dampfreformierung und die
Figuren 2A bis 2C Aspekte nicht erfindungsgemäßer und erfindungsgeäßer Anlagen und Verfahren.

### Ausführungsformen

Die im Rahmen der vorliegenden Offenbarung verwendeten Begriffe haben grundsätzlich die in der Fachwelt anerkannten Bedeutungen. So sei zu den hier verwendeten Begriffen auf die eingangs zitierte Fachliteratur verwiesen.

Der Begriff "Synthesegas" soll insbesondere ein Wasserstoff und Kohlenmonoxid enthaltendes Gasgemisch bezeichnen, wobei der Gehalt an Wasserstoff und Kohlenmonoxid in Summe insbesondere mehr als 50% auf Gewichtsbasis beträgt. Auch Kohlendioxid kann enthalten sein, wobei ein Gehalt an Wasserstoff, Kohlenmonoxid und Kohlendioxid durch eine Wassergaskonvertierung in bekannter Weise beeinflusst werden kann. Ein "Syntheserohgas" enthält insbesondere auch Wasser und nicht umgesetzte Kohlenwasserstoffe des Einsatzes.

Ein "Vorreformierungseinsatz" umfasst insbesondere Dampf und schwerere Kohlenwasserstoffe im erläuterten Sinn, jedoch auch Methan und etwas Wasserstoff. Der "Dampfreformierungseinsatz" umfasst überwiegend Methan, das aus den schwereren Kohlenwasserstoffen gebildet wurde, kann aber auch noch schwerere Kohlenwasserstoffe aufweisen. Er enthält ferner bereits einen gewissen Teil Kohlenmonoxid und Wasserstoff, sowie ggf. Kohlendioxid, die aus den schwereren Kohlenwasserstoffen gebildet wurden, sowie Dampf.

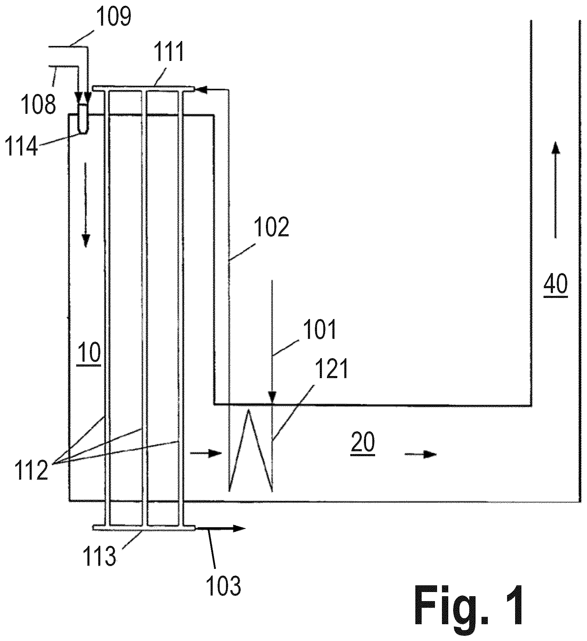

Zur Darstellung des Kontexts hier vorgeschlagener Ausgestaltungen ist in Figur 1 eine nicht erfindungsgemäße Anlage zur Dampfreformierung stark vereinfacht und in Teildarstellung veranschaulicht. Die Anlage ist zur Herstellung von Synthesegas eingerichtet. Sie stellt unter Verwendung eines methanreichen Dampfreformierungseinsatzes 101 zunächst ein Syntheserohgas 103 bereit. Weitere Anlagenkomponenten die zur Bereitstellung und/oder Aufbereitung des Dampfreformierungseinsatzes 101 eingerichtet sein können, beispielsweise zur Entsäuerung und/oder Entschwefelung und dergleichen, sowie zur Aufbereitung des Syntheserohgases 103, beispielsweise umfassend eine Kühlung, Verdichtung, Wassergaskonvertierung, Trocknung, Auftrennung und/oder Aufreinigung, sind lediglich aus Gründen der Übersichtlichkeit in Figur 1 nicht gesondert veranschaulicht. Auch hier wird auf die eingangs zitierte Fachliteratur ausdrücklich verwiesen.

Der Dampfreformierungseinsatz 101 wird im dargestellten Beispiel in einem oder mehreren Wärmetauscherbündeln, hier mit 121 bezeichnet, gegen heißes Rauchgas vorgewärmt. Dies erfolgt in einer Konvektionszone 20. Der vorgewärmte Dampfreformierungseinsatz 102 wird über einen Verteiler 111 auf mit einem geeigneten Katalysatormaterial gefüllte Reaktionsrohre 112 verteilt, in denen es in einer endothermen Reaktion in das Syntheserohgas 103 umgesetzt wird. Dies erfolgt in der unten erläuterten Strahlungszone 10. Das Syntheserohgas 103 wird über einen Sammler 113 gesammelt und insbesondere zunächst einem nicht veranschaulichten Kühlersystem zugeleitet. In diesem wird das Syntheserohgas 103 beispielsweise gequencht. In späteren Prozessschritten wird das Syntheserohgas oder ein hieraus gebildetes Gasgemisch bis unterhalb des Wassertaupunkts abgekühlt.

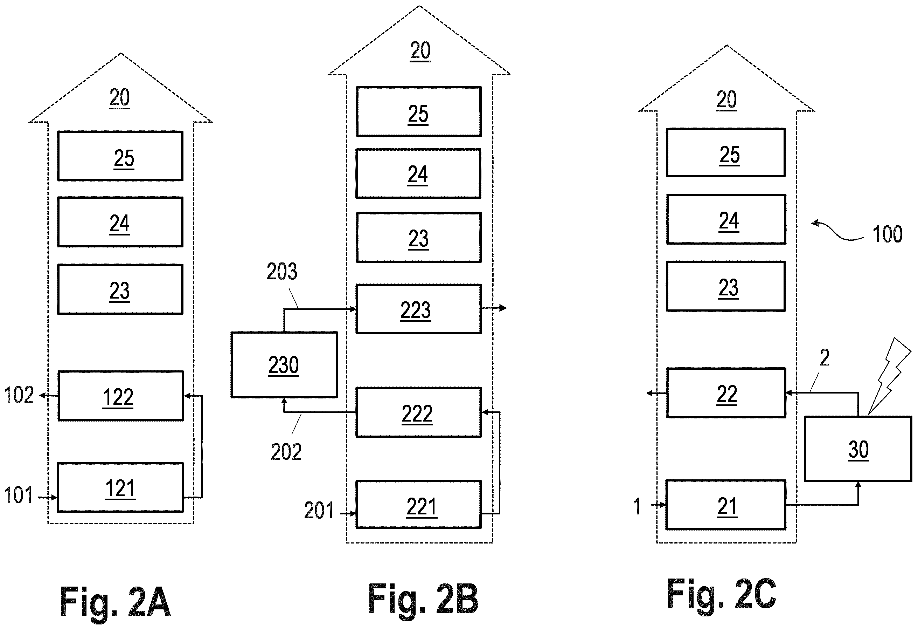

Die für die endotherme Dampfreformierungsreaktion benötigte Energie wird über Brenner 114 erzeugt, in denen ein Brennstoff 108 mit Luft 109 verbrannt wird. Das dabei erzeugte heiße Rauchgas, dessen Strömungsrichtung durch Pfeile angedeutet ist, gibt einen Teil seiner fühlbaren Wärme vorwiegend durch Strahlung in einer Strahlungszone 10 an den durch die Reaktionsrohre 112 strömenden Dampfreformierungseinsatz 102 ab. Mit einer Temperatur von immer noch deutlich über 1.000 °C wird das abgekühlte Rauchgas aus der Strahlungszone 10 abgezogen und in die Konvektionszone 20 eingeleitet, in der es gegen anzuwärmende Verfahrensströme abgekühlt wird. Hierzu sind neben dem Wärmetauscherbündel 121 weitere Wärmetauscherbündel in der Konvektionszone 20 angeordnet, wie anhand von Beispielen in den Figuren 2A und 2B erläutert. Das Rauchgas verlässt die Konvektionszone 20 und wird über einen Kamin 40 und entsprechende Reinigungseinrichtungen an die Atmosphäre abgegeben.

Für den Einsatz von schweren Einsatzstoffen im hier verstandenen Sinn, d.h. Einsatzstoffen, die einen beträchtlichen Anteil von Kohlenwasserstoffen mit zwei und mehr Kohlenstoffatomen enthalten, in der Dampfreformierung, ist, falls nicht auf einen angepassten Katalysator zurückgegriffen wird, die eingangs erläuterte Vorreformierung erforderlich, um höhere Kohlenwasserstoffe in Methan umzuwandeln, da sonst mit einer erheblichen Verkokung und der damit einhergehenden Deaktivierung am Katalysator zu rechnen ist. Die Integration einer Vorreformiereinheit bekannter Art als Nachrüstoption ist jedoch nur mit erheblichem Aufwand und Systemeingriffen möglich.

Wenn also eine bestehende Anlage zur Dampfreformierung ohne Vorreformiereinheit modifiziert werden muss, um Einsatzströme mit höheren Kohlenwasserstoffen zu verarbeiten (Einsatzwechsel oder Einsatzflexibilität), ist die Integration komplex und kostenintensiv. Dies ist der Fall, da nicht nur die Vorreformiereinheit, sondern auch Wärmetauscher für die Temperaturregelung erforderlich sind. Diese Wärmetauscher werden üblicherweise in das Abwärmesystem integriert, was bei einer bestehenden Anlage nicht immer möglich oder zumindest mit massiven Eingriffen verbunden ist. Das Hinzufügen von externen befeuerten oder unbefeuerten Wärmetauschern zur Anlage ist aus Sicht der Prozessintegration einfacher, kann aber aufgrund des zusätzlichen Flächenbedarfs unmöglich sein und wirkt sich negativ auf die Effizienz der Anlage aus, da sich ein höherer Betriebsmittelverbrauch und Emissionen ergeben. Insbesondere bei Anlagen, in denen eine flexible Beschickung erforderlich ist, muss die zusätzliche Ausrüstung hierfür geeignet sein.

Die nachfolgend nochmals unter Bezugnahme auf den Stand der Technik erläuterten Ausgestaltungen beseitigen diese Nachteile.

In den Figuren 2A bis 2C sind Aspekte nicht erfindungsgemäßer Anlagen und Verfahren (Figuren 2A und 2B) sowie von Anlagen und Verfahren gemäß hier vorgeschlagener Ausgestaltungen (Figur 2C) veranschaulicht. Es handelt sich jeweils um Darstellungen einer hier rein aus zeichnerischen Gründen senkrecht dargestellten Konvektionszone 20, im Fall der Figur 2A beispielsweise der Anlage gemäß Figur 1, und im Fall der Figur 2C einer um eine elektrisch beheizte Vorreformiereinheit 30 ergänzten Anlage 100 in Anlehnung an die in Figur 1 dargestellte. Die Konvektionszonen 20 sind jeweils rein aus zeichnerischen Gründen in Form von Pfeilen dargestellt, die die Strömungsrichtung des Rauchgases angeben.

In den Konvektionszonen 20 finden sich jeweils Wärmetauscherbündel an sich bekannter Art, wobei in den Konvektionszonen 20 in der nicht erfindungsgemäßen Ausgestaltung gemäß Figur 2A die zwei stromaufwärtigsten Wärmetauscherbündel 121 und 122 zur Vorwärmung eines Dampfreformierungseinsatzes 101 ausgebildet sind, der dann als entsprechend vorgewärmter Dampfreformierungseinsatz 102 ohne Vorreformierung in die Strahlungszone 10 und die dort angeordneten Reaktionsrohre 112 geführt wird (siehe Figur 1). Die Ausgestaltung gemäß Figur 2A ist insbesondere zur Bearbeitung methanreicher Dampfreformierungseinsätze 101 eingerichtet.

Die nicht erfindungsgemäße Ausgestaltung gemäß Figur 2B umfasst eine adiabat betriebene Vorreformiereinheit 230. In der Konvektionszone 20 in der nicht erfindungsgemäßen Ausgestaltung gemäß Figur 2B dienen die zwei stromaufwärtigsten Wärmetauscherbündel 221 und 222 zur Vorwärmung eines Vorreformierungseinsatzes 201, der dann als entsprechend vorgewärmter Vorreformierungseinsatz 202 der Vorreformiereinheit 230 zugeführt wird. Ein dort erhaltener Dampfreformierungseinsatz 203 wird nach Vorwärmung in einem weiter stromab im Rauchgasstrom in der Konvektionszone 20 liegenden Wärmetauscherbündel 223 in die Strahlungszone 10 und die dort angeordneten Reaktionsrohre 112 (siehe hierzu jeweils Figur 1) geführt. Die Ausgestaltung gemäß Figur 2B ist insbesondere zur Bearbeitung von schwereren Kohlenwasserstoffen bzw. Einsätzen eingerichtet.

In der Ausgestaltung gemäß Figur 2C ist eine elektrisch betriebene Vorreformiereinheit 30 vorgesehen. In der Konvektionszone 20 in der Ausgestaltung gemäß Figur 2C dienen die zwei stromaufwärtigsten Wärmetauscherbündel 21 und 22 zur Vorwärmung eines Vorreformierungseinsatzes 1 einerseits, der dann als entsprechend vorgewärmter Vorreformierungseinsatz 1 der Vorreformiereinheit 30 zugeführt wird, und zur Vorwärmung des in der Vorreformiereinheit 30 erhaltenen Dampfreformierungseinsatzes 2 andererseits. Nach der Vorwärmung wird der Dampfreformierungseinsatz 2 in die Strahlungszone 10 und die dort angeordneten Reaktionsrohre 112 (siehe hierzu jeweils Figur 1) geführt. Die Ausgestaltung gemäß Figur 2C ist ebenfalls insbesondere zur Bearbeitung von schwereren Kohlenwasserstoffen bzw. Einsätzen eingerichtet und stellt eine hier vorgeschlagene Ausgestaltung dar. Wie ersichtlich, erfordert die Integration der Vorreformiereinheit 30 gegenüber der nicht erfindungsgemäßen Ausgestaltung gemäß Figur 2A nur geringfügige Anpassungen.

Die weiter stromab liegenden Wärmetauscherbündel 23, 24 und 25, soweit jeweils vorhanden, dienen in den Ausgestaltungen gemäß den Figuren 2A bis 2C beispielsweise, in der Strömungsrichtung des Rauchgases, zur Dampfüberhitzung und zur Vorwärmung der Luft 109 für die Brenner 114 (siehe Figur 1).

## Patentansprüche

1. Verfahren zur Dampfreformierung, das umfasst:
Bereitstellen eines Vorreformierungseinsatzes (1), der Kohlenwasserstoffe mit einem, zwei und mehr Kohlenstoffatomen sowie Dampf umfasst;
Vorreformieren des Vorreformierungseinsatzes (1) unter Erhalt eines Dampfreformierungseinsatzes (2) und
Dampfreformieren des Dampfreformierungseinsatzes (2) oder eines Teils hiervon unter Erhalt eines Syntheserohgases (103),
wobei das Vorreformieren unter Verwendung einer mit elektrischem Strom beheizten Vorreformiereinheit (30) durchgeführt wird.

2. Verfahren nach Anspruch 1,
wobei der Vorreformierungseinsatz (1) vor dem Vorreformieren einer Vorwärmung unterworfen wird und/oder
wobei der Dampfreformierungseinsatz (2) vor dem Dampfreformieren einer Vorwärmung unterworfen wird.

3. Verfahren nach Anspruch 2,
wobei für das Dampfreformieren eine befeuerte Dampfreformiereinheit mit einer Strahlungszone (10) und einer Konvektionszone (20) verwendet wird und
wobei die Vorwärmung des Vorreformierungseinsatzes (1) vor dem Vorreformieren und/oder die Vorwärmung des Dampfreformierungseinsatzes (2) vor dem Dampfreformieren in der Konvektionszone (20) durchgeführt wird.

4. Verfahren nach Anspruch 3,
wobei die Vorwärmung des Vorreformierungseinsatzes (1) vor dem Vorreformieren und die Vorwärmung des Dampfreformierungseinsatzes (2) vor dem Dampfreformieren in zwei stromaufwärtigsten Wärmetauscherbündeln (21, 22) in der Konvektionszone (20) durchgeführt wird.

5. Verfahren nach Anspruch 4,
wobei das für die Vorwärmung des Vorreformierungseinsatzes (1) vor dem Vorreformieren verwendete Wärmetauscherbündel (21) stromauf des für die Vorwärmung des Dampfreformierungseinsatzes (2) vor dem Dampfreformieren verwendeten Wärmetauscherbündels (22) in der Konvektionszone (20) angeordnet ist.

6. Verfahren nach einem der vorstehenden Ansprüche,
wobei die Kohlenwasserstoffe mit zwei und mehr Kohlenstoffatomen zu mehr als 2 mol% Gewichtsprozent in dem Vorreformierungseinsatz (1) enthalten sind.

7. Verfahren nach einem der vorstehenden Ansprüche,
wobei die Kohlenwasserstoffe mit zwei und mehr Kohlenstoffatomen Kohlenwasserstoffe mit bis zu 6 Kohlenstoffatomen umfassen.

8. Verfahren nach einem der vorstehenden Ansprüche,
wobei die Vorreformiereinheit (30) in einem Temperaturbereich von 350 bis 550 °C betrieben wird.

9. Anlage (100) zur Dampfreformierung, die eine Dampfreformiereinheit aufweist und zur Durchführung der folgenden Schritte eingerichtet ist:
Bereitstellen eines Vorreformierungseinsatzes (1), der Kohlenwasserstoffe mit einem, zwei und mehr Kohlenstoffatomen sowie Dampf umfasst;
Vorreformieren des Vorreformierungseinsatzes (1) unter Erhalt eines Dampfreformierungseinsatzes (2); und
Dampfreformieren des Dampfreformierungseinsatzes (2) oder eines Teils hiervon unter Erhalt eines Syntheserohgases (103),
wobei für das Vorreformieren eine mit elektrischem Strom beheizbare Vorreformiereinheit (30) bereitgestellt ist.

10. Anlage nach Anspruch 9,
wobei die Anlage zur Durchführung eines Verfahrens nach einem der Ansprüche 1 bis 8 eingerichtet ist.

11. Verfahren zum Umrüsten einer Anlage zur Dampfreformierung, die ohne eine Vorreformiereinheit (30) ausgebildet ist,
wobei das Umrüsten das Bereitstellen einer mit elektrischem Strom beheizbaren Vorreformiereinheit (30) umfasst.
